# EUROPÄISCHE PATENTANMELDUNG

(11) **EP 3 521 101 A1**
(43) Veröffentlichungstag der Anmeldung: **07.08.2019**
(21) Anmeldenummer: 18209417.7
(22) Anmeldetag: 30.11.2018
(51) Int. Cl.: B60L 53/30, B60L 53/302

(54) **VERFAHREN ZUM AUFLADEN EINES ELEKTRISCH BETREIBBAREN FAHRZEUGS IM STAND**

(30) Priorität: 02.02.2018 DE 102018201634
(71) Anmelder: VOLKSWAGEN AKTIENGESELLSCHAFT, 38440 Wolfsburg (DE)
(72) Erfinder: Weß, Alexander, 38442 Wolfsburg (DE); Vogt, Henning Sebastian, 38102 Braunschweig (DE)

(57) **Zusammenfassung**

Die Erfindung betrifft ein Verfahren zum Aufladen eines elektrisch betreibbaren Fahrzeugs (K) im Stand. Bei dem Verfahren wird wenigstens ein dachseitiger Stromabnehmer (14a, 14b) des Fahrzeugs (K) mit wenigstens einem über dem Fahrzeug (K) angeordneten Leiter (13a, 13b) einer Ladestation (1) in Kontakt gebracht. Es werden mehrere Möglichkeiten vorgeschlagen, um während der Aufladung eine Überhitzung der Kontaktbereiche zu vermeiden und dadurch eine höhere Übertragungsleistung zu ermöglichen.

So wird vorgeschlagen, dass die Leiter (13a, 13b) bewegt werden, damit sich zwischen den Leitern (13a, 13b) und den Stromabnehmern (14a, 14b) ein sich örtlich ändernder Kontaktpunkt ausbildet.

Alternativ wird vorgeschlagen, die zwischen den Leitern und den Stromabnehmern bestehende Kontaktpunkte zu kühlen oder zwischen den Leitern und den Stromabnehmern einen linienartigen Kontaktbereich auszubilden.

## Beschreibung

Die Erfindung betrifft ein Verfahren zum Aufladen eines elektrisch betreibbaren Fahrzeugs sowie eine Vorrichtung zur Durchführung des Verfahrens.

Aus dem allgemeinen Stand der Technik ist die Aufladung von elektrisch betreibbaren Fahrzeugen durch die Verbindung von einem Ladestecker mit einer fahrzeugseitigen Ladesteckdose bekannt. Diese Art der Aufladung birgt den Nachteil in sich, dass der Fahrer des Fahrzeugs aussteigen und zur Erzeugung der elektrischen Verbindung selbst Hand anlegen muss.

Bekannt ist auch die Aufladung beziehungsweise der Betrieb von elektrisch betreibbaren Fahrzeugen mittels Oberleitungen.

Aus der DE 203 14 496 U1 ist eine Vorrichtung zum Anheben und Wiederabsenken eines Abschnitts eines Oberleitungskettenwerkes bekannt, wobei sich der Abschnitt zwischen zwei benachbarten Masten befindet. Konkret ist an jedem der Masten eine senkrechte Führungsstange für einen Schlitten vorhanden, mit dem ein das Oberleitungskettenwerk haltender Ausleger verbunden ist. Der Schlitten ist wiederum mit einer durch einen Elektromotor vertikal beweglichen Schubstange verbunden. Auf diese Weise ist es möglich, das Oberleitungskettenwerk im Bereich von Bahnübergängen anzuheben und wieder abzusenken, an denen eine Bahnlinie regelmäßig von solchen Schwertransporten überquert wird, welche weit über 4 Meter hoch sind.

Aus der EP3 121 058 A1 ist eine Anordnung zum Halten einer Oberleitung für elektrische Schienenfahrzeuge bekannt, bei der der Fahrdraht der Oberleitung horizontal und quer zur Fahrtrichtung oder auch vertikal verstellt werden kann.

Bei bekannten Oberleitungen können diese während der Fahrt mehrere hundert Kilowatt übertragen. Im Fall einer notwendigen Aufladung im Stand ist auf Grund der enormen Erwärmung zwischen den elektrisch kontaktierten Teilen jedoch nur ein Bruchteil an Ladeleistung möglich.

Der Erfindung liegt daher die Aufgabe zu Grunde, Verfahren zur Aufladung eines elektrisch betreibbaren Fahrzeugs vorzuschlagen, mit denen die Übertragungsleistung bei einer Aufladung im Stand ohne die Gefahr einer Überhitzung erhöht werden kann.

Des Weiteren liegt der Erfindung die Aufgabe zu Grunde, geeignete Vorrichtungen zur Durchführung der Verfahren vorzuschlagen.

Vorgenannte Aufgabe wird hinsichtlich der Verfahren mit den Merkmalen von Patentanspruch 1 und hinsichtlich der Vorrichtungen mit einer Ladestation mit den Merkmalen von Patentanspruch 8 gelöst. Vorteilhafte Ausbildungen beziehungsweise Weiterbildungen der Erfindung sind den jeweils abhängigen Ansprüchen entnehmbar.

Das erfindungsgemäße Verfahren zum Aufladen eines elektrisch betreibbaren Fahrzeugs im Stand schlägt vor, dass wenigstens ein dachseitiger Stromabnehmer des Fahrzeugs mit wenigstens einem über dem Fahrzeug angeordneten Leiter einer Ladestation in Kontakt gebracht wird.

Zumindest während der Aufladung wird nach einer ersten Verfahrensalternative der Leiter derart bewegt, dass zwischen dem Leiter und dem Stromabnehmer ein sich örtlich ändernder Kontaktpunkt ausgebildet wird.

Nach einer zweiten Verfahrensalternative wird ein zwischen dem Leiter und dem Stromabnehmer bestehender Kontaktpunkt gekühlt.

Eine weitere Verfahrensalternative schlägt vor, dass zwischen dem Leiter und dem Stromabnehmer ein linienartiger Kontaktbereich hergestellt wird.

Alle Verfahrensalternativen führen dazu, dass die Gefahr einer Überhitzung der stromübertragenden Bauteile im Kontaktbereich vermieden werden kann und dadurch die Übertragung einer deutlich höheren, elektrischen Leistung möglich ist. Dies führt wiederum zu einer deutlichen Verkürzung der Ladezeit.

Hierbei sollen unter elektrisch betreibbaren Fahrzeugen alle Fahrzeuge mit aufladbarer Antriebsbatterie (Traktionsbatterie) verstanden werden. Also sind beispielsweise Elektrofahrzeuge, Hybridfahrzeuge aber auch elektrisch betriebene Schienenfahrzeuge zu zählen. Des Weiteren kann das erfindungsgemäße Verfahren für einpolige Stromabnehmer, zweipolige oder auch mehrpolige Stromabnehmer eingesetzt werden.

Gemäß einer ersten Weiterbildung des Verfahrens wird vorgeschlagen, dass der Leiter derart bewegt wird, dass sich der Kontaktpunkt sowohl relativ zum Leiter als auch relativ zum Stromabnehmer örtlich ändert. Auf diese Weise ist eine optimale Schonung sowohl des Leiters als auch des Stromabnehmers möglich. Die Gefahr einer Überhitzung kann sowohl für den Leiter als auch für den Stromabnehmer wirksam verhindert werden.

Eine andere Ausbildung des Erfindungsgedankens schlägt vor, dass der Leiter derart bewegt wird, dass sich der Kontaktpunkt kontinuierlich örtlich ändert. Auf diese Weise ist eine besonders gleichmäßige Wärmeverteilung zwischen dem Leiter und dem Stromabnehmer möglich. In Abweichung davon ist es natürlich auch möglich, dass der Kontaktpunkt diskontinuierlich, also schrittweise verändert wird.

Um eine wirksame Kühlung des zwischen dem Leiter und dem Stromabnehmer bestehenden Kontaktpunktes zu erzielen wird gemäß einer anderen Weiterbildung vorgeschlagen, dass der Leiter gekühlt wird. Der Leiter wird also selbst als Ganzes gekühlt. Hierdurch ist wirksam eine Reduzierung der Temperatur im Kontaktpunkt erzielbar. Allerdings muss der Leiter hierfür speziell hergerichtet sein, was später noch erläutert wird.

Alternativ ist denkbar, dass der bestehende Kontaktpunkt gezielt örtlich gekühlt wird. Dies kann beispielsweise mit einem auf den Kontaktpunkt gerichteten, gasförmigen Kühlmedium, vorzugsweise mit Luft erfolgen. Auch hierdurch kann die im Kontaktpunkt entstehende Wärme wirksam in Grenzen gehalten werden.

Um Energie einzusparen, ist es sehr zweckmäßig, wenn gemessen wird, ob eine Stromübertragung zwischen dem Leiter und dem Stromabnehmer stattfindet und der übertragene Strom einen bestimmten Grenzwert überschreitet oder ob eine Temperatur im Kontaktpunkt einen bestimmten Grenzwert überschritten hat. Die oben erwähnte Bewegung des Leiters wird dann nur im Fall eines einen bestimmten Grenzwert überschreitenden Stroms durchgeführt und/oder wenn die Temperatur im Kontaktpunkt den besagten Grenzwert überschritten hat.

Ebenso wird eine Kühlung des Kontaktpunktes nur dann durchgeführt, wenn der übertragene Strom über einem bestimmten Grenzwert liegt.

Weiterhin ist denkbar, die Geschwindigkeit der Bewegung vom Leiter zumindest in Abhängigkeit von der Höhe des übertragenen Stroms zu verändern. Es ist auch denkbar, die Geschwindigkeit der Bewegung vom Leiter von Umgebungsbedingungen, wie bspw. von der Umgebungstemperatur oder auch von der Windstärke abhängig zu machen.

So ist beispielsweise zweckmäßig, bei steigendem Strom und/oder bei steigender Umgebungstemperatur die Geschwindigkeit der Bewegung des Leiters zu erhöhen. In umgekehrter Richtung ist denkbar, die Geschwindigkeit der Bewegung des Leiters dann zu reduzieren, wenn die Höhe des übertragenen Stroms und/oder die Umgebungstemperatur sinken. Auch kann es zweckmäßig sein, die Geschwindigkeit der Bewegung des Leiters zu reduzieren, wenn sich die Windstärke in der Umgebung erhöht, da die erhöhte Windstärke ebenfalls zur Kühlung beiträgt.

Es ist hinsichtlich einer hohen Prozesssicherheit des Verfahrens sehr zweckmäßig, wenn die Position des aufzuladenden Fahrzeugs relativ zur Ladestation erfasst und bei einer einen bestimmten Grenzwert überschreitenden Abweichung von einer Sollposition eine Korrekturbewegung des Leiters durchgeführt wird.

Wie bereits erwähnt, soll mit der Erfindung auch eine Ladestation zur Durchführung der vorgeschlagenen Verfahrensweisen bereitgestellt werden. Eine solche Ladestation weist eine Halteeinrichtung zur Halterung wenigstens eines örtlich auf die Ladestation begrenzten Leiters in einem Abstand von einem Boden (beispielsweise einer Fahrbahn) auf.

Dabei ist wenigstens eine Bewegungseinrichtung zur kontinuierlichen oder diskontinuierlichen (also schrittweisen) Bewegung des Leiters vorhanden. Die Bewegungsvorrichtung kann einen stufenlos regelbaren Elektromotor oder auch einen Schrittmotor aufweisen. Auf diese Weise kann ein sich örtlich dynamisch verändernder Kontaktpunkt zwischen dem Leiter und dem Stromabnehmer eines aufzuladenden Fahrzeugs realisiert werden.

Alternativ ist auch denkbar, dass der Leiter als ein Kühlmedium aufnehmender Hohlleiter ausgebildet ist. Beispielsweise kann der Leiter Wasser oder vorzugsweise elektrisch nicht leitendes Kühlmedium, wie Öl aufnehmen, womit eine sehr wirksame Kühlung des Leiters und damit ebenfalls die Gefahr einer Überhitzung in Kontaktstellen zwischen dem Leiter und einem fahrzeugseitigen Stromabnehmer vermindert werden kann. Bei dieser Variante der Ladestation ist es zweckmäßig, wenn eine Umwälzvorrichtung zur Umwälzung des Kühlmediums vorhanden ist und zusätzlich geeignete Mittel zur Erzeugung eines Wärmetauschs zwischen Kühlmittel und Umgebung vorhanden sind, damit das Kühlmittel stets auf einer geeigneten Kühltemperatur gehalten werden kann.

Als weitere Alternative ist auch denkbar, dass die Ladestation eine Kühleinrichtung aufweist zur gezielten Kühlung eines bestehenden Kontaktpunktes zwischen dem Leiter und einem Stromabnehmer eines aufzuladenden Fahrzeugs. Die Kühleinrichtung kann vorzugsweise in der Form eines Gebläses ausgebildet sein. Für die genannte Alternative ist ferner eine Wärmeerfassungseinrichtung zur Erfassung des Kontaktpunktes sehr zweckmäßig. Die Wärmeerfassungseinrichtung kann beispielsweise und bevorzugt als Wärmebildkamera (Infrarot-Kamera) ausgebildet sein. Es ist dann sehr vorteilhaft, wenn die Kühleinrichtung gezielt auf den Kontaktbereich ausrichtbar ist. In diesem Falle ist es möglich, nach Erfassung des Kontaktpunktes durch die Wärmeerfassungseinrichtung die Kühleinrichtung optimal auf den Kontaktbereich auszurichten und damit eine optimale Kühlung des Kontaktpunktes herbeizuführen.

Als weitere Alternative ist denkbar, dass der wenigstens eine Leiter der Ladestation plattenförmig ausgebildet ist. Auf diese Weise kann von Anfang an ein linienartiger Kontaktbereich zwischen Leiter und Stromabnehmer realisiert werden. Dies führt zu einer deutlich besseren Verteilung der entstehenden Wärme, was die Gefahr einer auftretenden Überhitzung spürbar mindert. Dabei ist beispielsweise denkbar, den Leiter im Umriss rechteckig, rund oder oval auszubilden.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht maßstabsgetreu. In manchen Figuren können Proportionen übertrieben dargestellt sein, um Merkmale eines Ausführungsbeispiels deutlicher hervorheben zu können.

Es zeigen, jeweils schematisch
- Fig. 1: ein elektrisch betreibbares Fahrzeug beim Aufladen an einer Ladestation,
- Fig. 2: eine vereinfachte Ansicht von oben gemäß Ansicht II aus Fig. 1,
- Fig. 3: unterschiedliche Positionen der Kontaktpunkte zwischen den Leitern und den Stromabnehmern, hervorgerufen durch eine ladungsstationsseitige Bewegungsvorrichtung für die Leiter,
- Fig. 4: eine Ansicht vergleichbar mit Fig. 2, jedoch mit einer anderen Bewegungsvorrichtung für die Leiter,
- Fig. 5: unterschiedliche Positionen der Kontaktpunkte zwischen den Leitern und den Stromabnehmern, hervorgerufen durch die Bewegungsvorrichtung gemäß Fig. 4,
- Fig. 6: eine Ansicht vergleichbar mit Fig. 2, jedoch mit einer anderen Bewegungsvorrichtung für die Leiter,
- Fig. 7: eine seitliche Ansicht gemäß Ansicht VII aus Fig. 6,
- Fig. 8: eine Ansicht, vergleichbar mit Fig. 1, wobei jedoch nur eine weitere Bewegungsvorrichtung für die Leiter dargestellt ist,
- Fig. 9: die Darstellung eines Verfahrens zur Kühlung der Kontaktpunkte zwischen den Leitern und den Stromabnehmern,
- Fig. 10: die Darstellung eines alternativen Verfahrens zur Kühlung der Kontaktpunkte und
- Fig. 11: die Darstellung einer alternativen Ausführungsform für die Leiter.

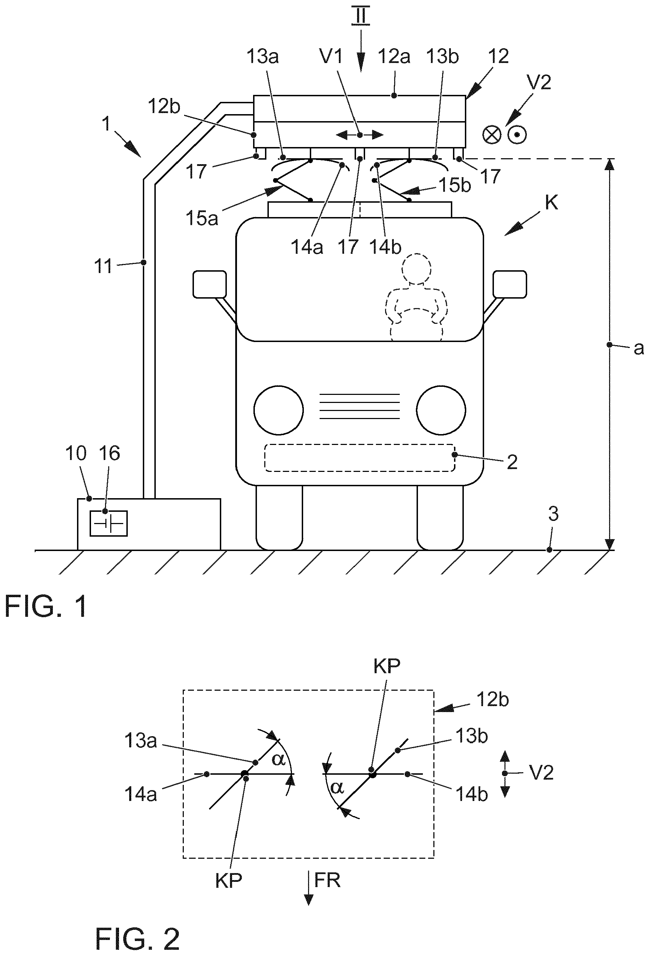

In Fig. 1 ist eine Ladestation 1 für ein elektrisch betreibbares Fahrzeug K dargestellt. Im Ausführungsbeispiel handelt es sich bei dem Fahrzeug K um einen elektrisch betreibbaren Lastkraftwagen. Wie ersichtlich, weist die Ladestation 1 einen mit einem Boden 3 befestigten Standkörper 10 auf. Vom Standkörper 10 erstreckt sich nach oben eine mastartige Halterung 11, welche eine Bewegungsvorrichtung 12 zur Bewegung eines elektrischen Leiters 13a (Pluspol) und eines elektrischen Leiters 13b (Minuspol) trägt.

Die Bewegungsvorrichtung weist ein Oberteil 12a und ein gegenüber diesem beweglich, vorzugsweise verschieblich gehaltenes Unterteil 12b auf.

Die in ihrer Kinematik nicht näher dargestellte Bewegungsvorrichtung 12 erlaubt eine Bewegung des Unterteils 12b in einem horizontalen Verfahrweg V1 in Richtung der Zeichenebene und in einem dazu senkrecht stehenden, horizontalen Verfahrweg V2.

Der Standkörper 10 dient überdies zur Aufnahme einer Spannungsquelle 16, welche die Leiter 13a und 13b über nicht näher dargestellte elektrische Verbindungen mit Gleichstrom versorgt.

Da die Ladestation 1 zur Aufladung von elektrisch betreibbaren LKWs ausgebildet ist, sind die Leiter 13a und 13b durch die Höhe der Halterung 11 in einem geeigneten Abstand a von dem Boden 3 beabstandet. So beträgt der Abstand a vorzugsweise in etwa 4,70 Meter.

Zum Zwecke der Aufladung einer im Fahrzeug K befindlichen Traktionsbatterie 2 weist das Fahrzeug K dachseitige Stromabnehmer 14a und 14b auf. Die Stromabnehmer 14a und 14b sind jeweils Bestandteil von bekannten Pantographen 15a und 15b.

Zur Aufladung muss der Führer des Fahrzeugs K das Fahrzeug K möglichst genau unter der Bewegungsvorrichtung 12 auf eine vorzugsweise markierte Sollposition abstellen.

Da dies nicht immer möglich ist, sind mit dem Unterteil 12b Positionserfassungseinrichtungen 17 verbunden, welche die Position eines unter der Ladestation 1 stehenden Fahrzeugs K ermitteln können. Die Positionserfassungseinrichtungen 17 können beispielsweise als Ultraschallsensoren oder auch als Kameras ausgebildet sein. Beispielsweise können geeignete Markierungen oder auch Erhebungen auf dem Dach des Fahrzeugs K oder an den Pantographen 15a, 15b vorhanden sein, welche durch die Positionserfassungseinrichtungen 17 erfassbar sind.

Die Positionserfassungseinrichtungen 17 sind in geeigneter Weise signaltechnisch mit einer nicht näher dargestellten Auswerte- und Steuereinrichtung verbunden. Wenn eine Abweichung des Fahrzeugs K von einer Sollposition derart abweicht, dass ein bestimmter Grenzwert überschritten wird, so wird von der Auswerte- und Steuereinrichtung ein nicht näher dargestellter Antrieb der Bewegungsvorrichtung 12 derart angesteuert, dass die Bewegungsvorrichtung 12 eine Korrekturbewegung durchführt. So können die Leiter 13a, b optimal zu den Stromabnehmern 14a, b ausgerichtet werden.

Die Fig. 2 zeigt eine Ansicht von oben, wobei der Übersichtlichkeit halber lediglich die Leiter 13a und 13b sowie die damit kontaktierenden Stromabnehmer 14a und 14b dargestellt sind. Das Unterteil 12b der Bewegungsvorrichtung 12, mit dem die Leiter 13a und 13b verbunden sind, ist lediglich gestrichelt angedeutet.

So ist ersichtlich, dass die Leiter 13a und 13b quer zu den Stromabnehmern 14a und 14b ausgerichtet sind. Die Stromabnehmer 14a und 14b sind in etwa senkrecht zu einer üblichen Fahrtrichtung FR des Fahrzeugs K ausgerichtet. Die Leiter 13a und 13b sind zu den Stromabnehmern 14a und 14b in einem Winkel α angeordnet. Der Winkel α beträgt beispielsweise in etwa 45 Grad.

In der dargestellten Ausgangsposition sind Kontaktpunkte KP, die sich zwischen den Leitern 13a, 13b und den Stromabnehmern 14a, 14b ausbilden in etwa jeweils mittig zu den Leitern 13a, b beziehungsweise zu den Stromabnehmern 14a, b positioniert.

Um während eines Ladevorgangs nun eine Überhitzung und damit eine Beschädigung zu vermeiden, wird das Unterteil 12b der Bewegungsvorrichtung 12 in einem Verfahrweg V2 hin und her bewegt. Dabei erfolgt die Bewegung des Unterteils 12b über den gesamten Verfahrweg V2 kontinuierlich.

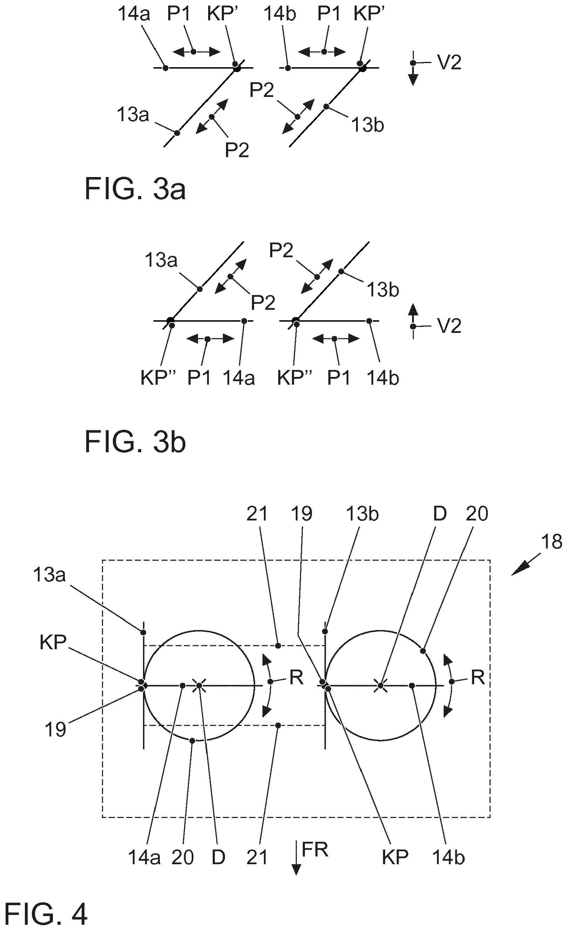

So werden beim Verfahren des Unterteils 12b in einer ersten Richtung die Kontaktpunkte KP bis zu einer ersten Extremstellung verändert (vergleiche KP', Fig. 3a) und bei der Bewegung des Unterteils 12b in entgegengesetzter Richtung in eine zweite Extremposition (vergleiche KP", Fig. 3b).

Durch die kontinuierliche Hin- und Herbewegung des Unterteils 12b wird somit auch eine kontinuierliche Positionsveränderung des Kontaktpunktes KP erzielt.

In den Figuren ist mit P1 eine kontinuierliche Positionsveränderung des Kontaktpunktes KP auf den Stromabnehmern 14a, b und mit P2 eine kontinuierliche Positionsveränderung des Kontaktpunktes KP auf den Leitern 13a, b beziffert.

So kann durch die Bewegung des Unterteils 12b und den sich örtlich ändernden Kontaktpunkt KP wirksam eine örtliche Überhitzung der Leiter 13a, b und der Stromabnehmer 14a, b erzielt werden. Dies ermöglicht eine Erhöhung der elektrischen Übertragungsleistung im Stand, ohne dass die Gefahr von Einbränden in den besagten Bauteilen entsteht.

Darüber hinaus wird mit einer nicht näher dargestellten Messvorrichtung gemessen, ob eine Stromübertragung zwischen den Leitern 13a, b und den Stromabnehmern 14a, b überhaupt stattfindet oder ob eine Temperatur in den Kontaktpunkten KP einen bestimmten Grenzwert überschritten hat. Eine Bewegung der Leiter 13a, b durch die Bewegungsvorrichtung 12 findet erst dann statt, wenn eine Stromübertragung durchgeführt wird und/oder wenn die Temperatur in den Kontaktpunkten KP den Grenzwert überschritten hat.

Im Falle einer Leistungsübertragung wird zudem die Geschwindigkeit der Bewegung des Unterteils 12b in Abhängigkeit von der Höhe des übertragenen Stroms verändert. Je höher der Übertragungsstrom ist, desto höher ist die Geschwindigkeit der Bewegung des Unterteils 12b. Zusätzlich ist auch denkbar, die Geschwindigkeit in Abhängigkeit von Umgebungsbedingungen wie Umgebungstemperatur, Windstärke oder dergleichen zu verändern.

Diese Vorgehensweise ist auch für die im Folgenden genannten, alternativen Bewegungsvorrichtungen denkbar, ohne dies jeweils gesondert zu erwähnen.

In der Fig. 4 ist eine Bewegungsvorrichtung 18 ersichtlich, welche zwei kreisrunde Scheiben 20 aufweist. An die Scheiben 20 sind über Anlenkpunkte 19 jeweils die Leiter 13a beziehungsweise 13b angelenkt. Die Leiter 13a, b sind über eine starre isolierende Verbindung 21 miteinander verbunden. Dies führt dazu, dass sie bei ihrer Bewegung weiterhin parallel und in Richtung einer üblichen Fahrtrichtung FR ausgerichtet sind.

Die Bewegungsvorrichtung 18 kann nun die Scheiben 20 über einen nicht näher dargestellten elektromotorischen Antrieb in eine Rotationsbewegung R um eine Drehachse D versetzen. Wie ersichtlich, befindet sich ein jeweils zwischen den Leitern 13a, b und den Stromabnehmern 14a, b ausgebildeter Kontaktpunkt KP in der Darstellung mittig zu den Leitern 13a, b und aus Zeichnungssicht im linken Bereich der Stromabnehmer 14a, b. Die Rotationsbewegung R wird wiederum kontinuierlich ausgeführt.

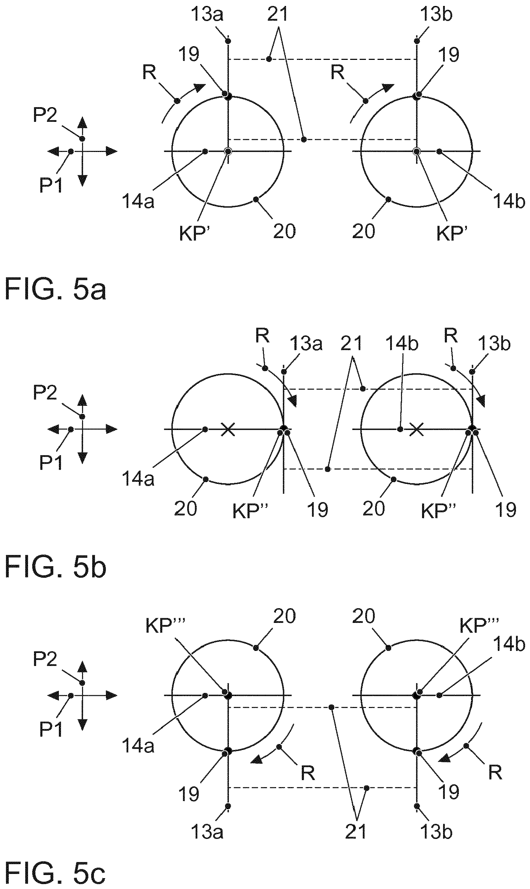

So ist ersichtlich, dass während der Rotationsbewegung R, von der ein paar Momentaufnahmen in den Fig. 5a bis 5c ersichtlich sind, die Kontaktpunkte KP auf den Stromabnehmern 14a, b eine kontinuierliche Positionsveränderung P1 und auf den Leitern 13a, b eine kontinuierliche Positionsveränderung P2 erfahren, welche Positionsänderungen zwischen extremen Positionen der Kontaktpunkte KP liegen (vergleiche auch KP, KP', KP" und KP"').

Auch die Bewegungsvorrichtung 18 ermöglicht somit eine kontinuierliche Positionsveränderung der Kontaktpunkte KP und somit eine Verminderung der lokalen Überhitzungsgefahr.

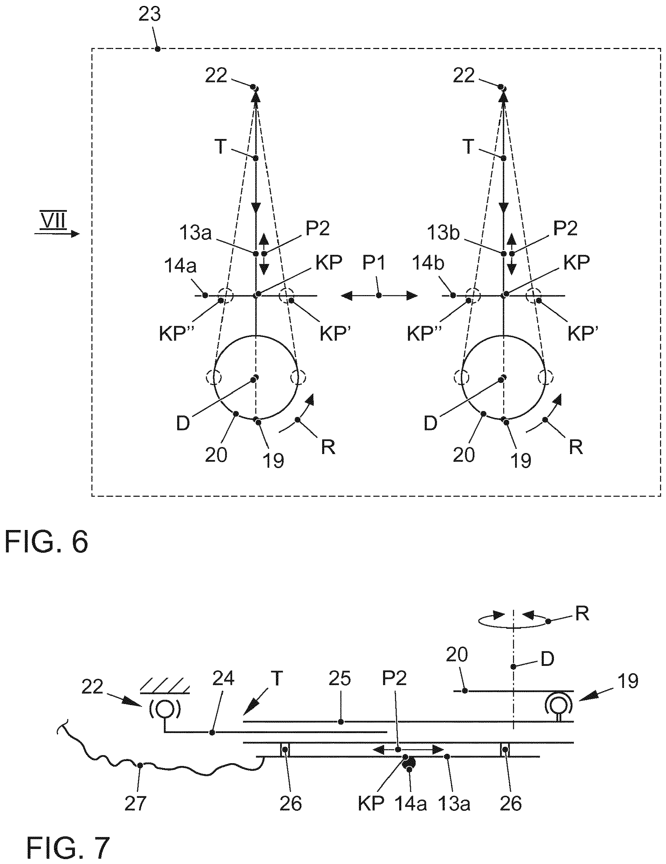

In Fig. 6 ist wiederum eine weitere Bewegungsvorrichtung 23 dargestellt. Die Bewegungsvorrichtung 23 weist ebenfalls zwei kreisrunde Scheiben 20 auf, an die die Leiter 13a, 13b vom Prinzip her an einem Ende über Anlenkpunkte 19 angelenkt sind. Mit einem anderen, teleskopierbaren Ende T (durch Doppelpfeile angedeutet) sind die Leiter 13a, b jeweils an einem Anlenkpunkt 22 angelenkt.

Eine mögliche Detailkonstruktion ist aus der Fig. 7 ersichtlich. So ist der Leiter 13a ersichtlich, welcher mit dem Stromabnehmer 14a einen Kontaktpunkt KP ausbildet. Der Leiter 13a ist über Isolierungen 26 mit einem Rohr 25 verbunden. Das Rohr 25 ist über den Anlenkpunkt 19 mit der Scheibe 20 gelenkig verbunden. Im Rohr 25 ist wiederum eine Schubstange 24 verschieblich gehalten, welche ihrerseits mit dem Anlenkpunkt 22 gelenkig verbunden ist.

Vollführt die Scheibe 20 nun eine Rotationsbewegung R um die Drehachse D, so wird hierdurch der Kontaktpunkt KP ebenfalls kontinuierlich in seiner Position bezüglich der Stromabnehmer 14a, b (vergleiche P1, Fig. 6) und bezüglich der Leiter 13a, b (vergleiche P2, Fig. 7) verändert. Extremstellungen des Kontaktpunktes KP in Abhängigkeit der Rotationsbewegung R sind mit KP' und KP" beziffert (vergleiche Fig. 6).

Die Leiter 13a, b werden jeweils über eine flexible Stromleitung 27 mit Strom versorgt.

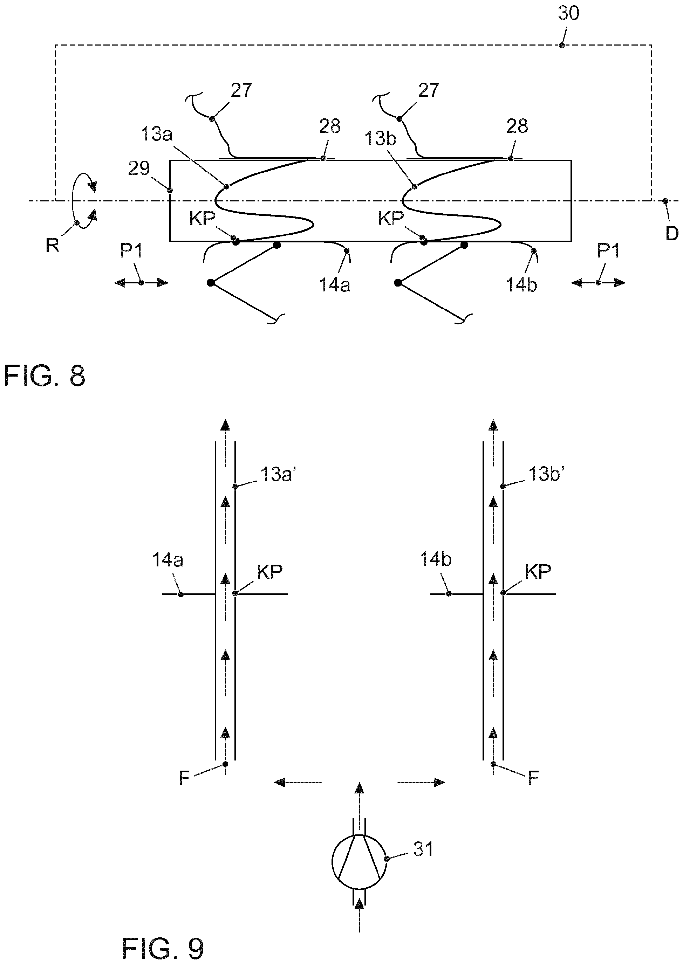

In Fig. 8 ist schließlich noch eine weitere Ausführungsform einer Bewegungsvorrichtung 30 dargestellt.

Bei der Bewegungsvorrichtung 30 ist eine isolierende Trommel 29 vorhanden, in die Leiter 13a, 13b über den Umfang mäanderförmig verlaufend eingebracht sind. Der Übersichtlichkeit halber ist auch hier die Ladestation 1 nicht weiter dargestellt.

Auf der einer Fahrbahn zugewandten, unteren Seite der Trommel 29 liegen die Stromabnehmer 14a, 14b an und bilden einen Kontaktpunkt KP mit den Leitern 13a, 13b aus. Auf der gegenüberliegenden, oberen Seite der Trommel 29 liegen Schleifkontakte 28 an den Leitern 13a, b an, über die Strom zu- beziehungsweise abgeleitet werden kann.

Wird nun die Trommel 29 über einen nicht näher dargestellten Antrieb in eine kontinuierliche Rotationsbewegung R um eine Drehachse D versetzt, so vollführen die Kontaktpunkte KP auf den Stromabnehmern 14a, 14b eine Positionsveränderung P1. Gleichermaßen folgen die Kontaktpunkte KP dem mäanderförmigen Verlauf der Leiter 13a, 13b.

Die Fig. 9 zeigt nun eine alternative Lösung zur Vermeidung einer lokalen Überhitzung an Kontaktpunkten KP, ohne dass eine Bewegungsvorrichtung zur Positionsveränderung der Kontaktpunkte KP notwendig ist. Konkret sind bei dieser Lösung Leiter 13a' und 13b' eingesetzt, welche als Hohlleiter ausgebildet sind. Zusätzlich werden die Leiter 13a', 13b' durch eine Kühlflüssigkeit F durchströmt. Zur Umwälzung der Kühlflüssigkeit F kann eine Pumpe 31 vorhanden sein. Der Kühlkreislauf ist vorzugsweise geschlossen ausgebildet, was jedoch hier nicht näher dargestellt ist. Falls notwendig ist der Kühlkreislauf isoliert ausgeführt, damit keine elektrische Verbindung zwischen den beiden Leitern 13a' und 13b' entsteht. Dies kann beispielsweise durch ein nicht leitfähiges Öl als Kühlmedium oder dadurch erreicht werden, dass zwei getrennte Kühlkreisläufe (ein Kühlkreislauf je Leiter) vorhanden sind. Falls notwendig, kann auch ein zusätzlicher Wärmetauscher zur besseren Abführung der durch die Kühlflüssigkeit F aufgenommenen Wärmeenergie eingesetzt werden (nicht dargestellt).

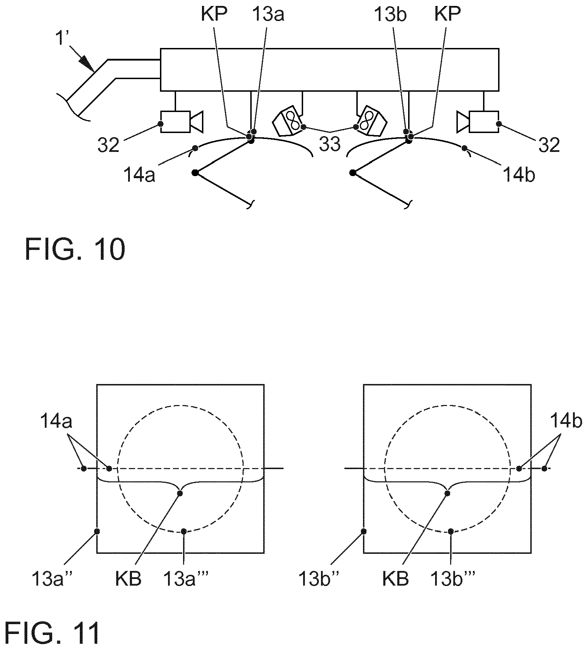

Fig. 10 zeigt eine andere Möglichkeit zur Kühlung der Kontaktpunkte KP. Es ist eine Ladestation 1' vorhanden, welche zu diesem Zweck Wärmeerfassungseinrichtungen 32 aufweist. Die Wärmeerfassungseinrichtungen 32 sind im Ausführungsbeispiel als Infrarot-Kameras ausgebildet.

Während einer Aufladung wird von der Wärmeerfassungseinrichtung 32 ein sich erhitzender Kontaktpunkt KP erfasst. Daraufhin werden über eine nicht dargestellte Auswerte- und Steuereinrichtung düsenartige Gebläse 33 derart angesteuert, dass diese exakt bzw. gezielt auf die Kontaktpunkte KP ausgerichtet werden und einen kühlenden Luftstrom auf die Kontaktpunkte KP erzeugen.

In der Fig. 11 ist eine Lösung dargestellt, bei der plattenförmige Leiter 13a", 13b" beziehungsweise 13a'" und 13b'" eingesetzt werden. Die plattenförmigen Leiter können in ihrem Umriss beispielsweise rechteckig, quadratisch, rund oder oval ausgebildet sein. Durch diese Ausbildung wird nicht mehr nur lediglich ein Kontaktpunkt, sondern vielmehr ein linienartiger Kontaktbereich KB ausgebildet. Dies führt zu einer Vergleichmäßigung der Wärmeübertragung und somit zu einer Verminderung der Überhitzungsgefahr.

### Bezugszeichenliste

- 1,1': Ladestation
- 2: Traktionsbatterie
- 10: Standkörper
- 11: Halterung
- 12: Bewegungsvorrichtung
- 12a: Oberteil
- 12b: Unterteil
- 13a, 13a', 13a": Leiter (Pluspol)
- 13b, 13b', 13b": Leiter (Minuspol)
- 14a, b: Stromabnehmer
- 15a, b: Pantograph
- 16: Spannungsquelle (Gleichstrom)
- 17: Positionserfassungseinrichtung
- 18: Bewegungsvorrichtung
- 19: Anlenkpunkte
- 20: Scheiben
- 21: starre, isolierende Verbindung
- 22: Anlenkpunkte
- 23: Bewegungsvorrichtung
- 24: Schubstange
- 25: Rohr
- 26: Isolierungen
- 27: flexible Stromzuleitung
- 28: Schleifkontakte
- 29: isolierende Trommel
- 30: Bewegungsvorrichtung
- 31: Pumpe
- 32: Wärmeerfassungseinrichtung (Infrarot-Kamera)
- 33: Kühleinrichtung, Gebläse

- α: Winkel
- a: Abstand
- D: Drehachse
- F: Kühlflüssigkeit
- FR: übliche Fahrtrichtung
- K: elektrisch betreibbares Fahrzeug
- KB: Kontaktbereich
- KP, KP', KP", KP'": Kontaktpunkt
- P1: Positionsveränderung des Kontaktpunktes auf dem Stromabnehmer
- P2: Positionsveränderung des Kontaktpunktes auf dem Leiter
- R: Rotationsbewegung
- T: teleskopierbares Ende
- V1: horizontaler Verfahrweg
- V2: horizontaler Verfahrweg

## Patentansprüche

1. Verfahren zum Aufladen eines elektrisch betreibbaren Fahrzeugs (K) im Stand, wobei wenigstens ein dachseitiger Stromabnehmer (14a, 14b) des Fahrzeugs (K) mit wenigstens einem über dem Fahrzeug (K) angeordneten Leiter (13a, 13b; 13a', 13b'; 13a", 13b"; 13a'", 13b'") einer Ladestation (1, 1') in Kontakt gebracht wird und zumindest während der Aufladung
• der Leiter (13a, 13b) derart bewegt wird, dass zwischen dem Leiter (13°, 13b) und dem Stromabnehmer (14a, 14b) ein sich örtlich ändernder Kontaktpunkt (KP) ausgebildet wird oder
• ein zwischen dem Leiter (13a', 13b') und dem Stromabnehmer (14a, 14b) bestehender Kontaktpunkt (KP) gekühlt wird oder
• zwischen dem Leiter (13a", 13b"; 13a"', 13b'") und dem Stromabnehmer (14a, 14b) ein linienartiger Kontaktbereich (KB) hergestellt.

2. Verfahren nach Anspruch 1, **dadurch gekennzeichnet, dass** der Leiter (13a, 13b) derart bewegt wird, dass sich der Kontaktpunkt (KP) sowohl relativ zum Leiter (13a, 13b) als auch relativ zum Stromabnehmer (14a, 14b) örtlich ändert.

3. Verfahren nach Anspruch 1 oder 2, **dadurch gekennzeichnet, dass** der Leiter (13a, 13b) derart bewegt wird, dass sich der Kontaktpunkt (KP) kontinuierlich örtlich ändert.

4. Verfahren nach Anspruch 1, **dadurch gekennzeichnet, dass** der Leiter (13a', 13b') gekühlt wird.

5. Verfahren nach Anspruch 1, **dadurch gekennzeichnet, dass** der bestehende Kontaktpunkt (KP) örtlich gekühlt wird.

6. Verfahren nach einem der Ansprüche 1 bis 3, **dadurch gekennzeichnet, dass** gemessen wird, ob eine Stromübertragung zwischen dem Leiter (13a, 13b) und dem Stromabnehmer (14a, 14b) stattfindet und der übertragene Strom einen bestimmten Grenzwert überschreitet oder ob eine Temperatur im Kontaktpunkt (KP) einen bestimmten Grenzwert überschritten hat, wobei eine Bewegung des Leiters (13a, 13b) nur im Fall eines einen bestimmten Grenzwert überschreitenden Stroms durchgeführt wird und/oder wenn die Temperatur im Kontaktpunkt (KP) einen bestimmten Grenzwert überschritten hat.

7. Verfahren nach Anspruch 6, **dadurch gekennzeichnet, dass** die Geschwindigkeit der Bewegung vom Leiter (13a, 13b) zumindest in Abhängigkeit von der Höhe des übertragenen Stroms verändert wird.

8. Verfahren nach einem der vorhergehenden Ansprüche, **dadurch gekennzeichnet, dass** die Position des aufzuladenden Fahrzeugs (K) relativ zur Ladestation (1) erfasst und bei einer einen Grenzwert überschreitenden Abweichung von einer Sollposition eine Korrekturbewegung des Leiters (13a, 13b) durchgeführt wird.

9. Ladestation (1, 1') zur Durchführung des Verfahrens nach einem der vorhergehenden Ansprüche, wobei die Ladestation (1, 1') eine Halteeinrichtung zur Halterung wenigstens eines örtlich auf die Ladestation (1, 1') begrenzten Leiters (13a, 13b; 13a', 13b'; 13a", 13b"; 13a'", 13b'") in einem Abstand (a) von einem Boden (3) aufweist und wobei
• wenigstens eine Bewegungsvorrichtung (12, 18, 23, 30) zur kontinuierlichen oder diskontinuierlichen Bewegung des Leiters (13a, 13b) vorhanden ist oder
• der Leiter (13°', 13b') als ein ein Kühlmedium (F) aufnehmender Hohlleiter ausgebildet ist oder
• eine Kühleinrichtung (33) vorhanden ist zur gezielten Kühlung eines bestehenden Kontaktpunktes (KP) zwischen dem Leiter (13°, 13b) und einem Stromabnehmer (14°, 14b) eines aufzuladenden Fahrzeugs (K) und eine Wärmeerfassungseinrichtung (32) zur Erfassung des Kontakpunktes (KP), wobei die Kühleinrichtung (33) auf den Kontaktbereich (KP) ausrichtbar ist oder
• der Leiter (13a", 13b"; 13a"', 13b'") plattenförmig ausgebildet ist.
